# DEMANDE DE BREVET EUROPEEN

(11) **EP 1 267 559 A1**
(43) Date de publication de la demande: **18.12.2002**
(21) Numéro de dépôt: 02291469.1
(22) Date de dépôt: 13.06.2002
(51) Int. Cl.: H04M 3/56

(54) **Procédé et système de mise en communication simultanée d'une pluralité d'utilisateurs d'un réseau téléphonique**

(30) Priorité: 15.06.2001 FR 0108070
(71) Demandeur: FRANCE TELECOM SA, 75015 Paris (FR)
(72) Inventeur: Vinouze, Bruno, 22710 Port Blanc (FR); Montels Lacour, Isabelle, 75007 Paris (FR)
(74) Mandataire: Maillet, Alain

(57) **Abrégé**

L'invention concerne un procédé de mise en communication simultanée d'une pluralité d'utilisateurs à travers un réseau téléphonique, une première connexion à travers ledit réseau ayant été préalablement établie entre un premier et un second utilisateurs, caractérisé en ce qu'il comprend :
- l'établissement d'une seconde connexion entre le premier ou second utilisateur, dit utilisateur appelant, et un pont de conférence ;
- l'établissement d'une troisième connexion entre ledit pont de conférence et un troisième utilisateur, dit utilisateur appelé, sur une première commande de l'utilisateur appelant ;
- une mise en communication simultanée, par ledit pont de conférence, desdits premier, second et troisième utilisateurs, sur une seconde commande de l'utilisateur appelant.

L'invention concerne également un système permettant de mettre en oeuvre ledit procédé.

## Description

La présente invention concerne un procédé et un système de mise en communication simultanée d'une pluralité d'utilisateurs de réseaux téléphoniques. Plus particulièrement, elle vise à permettre une conversation téléphonique entre plusieurs personnes, quels que soient les terminaux téléphoniques dont ces personnes disposent. Il peut s'agir de terminaux analogiques ou numériques, fixes ou mobiles.

Dans l'état de la technique des réseaux téléphoniques, plusieurs systèmes de mise en communication simultanée d'une pluralité d'utilisateurs sont connus.

On connaît, par exemple, le système de mise en communication simultanée sur lequel est basé le service de France Télécom appelé Conversation à Trois. Ce service permet à trois personnes de converser en même temps. Ce système utilise des commutateurs à autonomie d'acheminement (CAA) du réseau téléphonique public, commandés à partir du terminal téléphonique par des commandes DTMF générées par la manipulation de touches de clavier téléphonique spécialement prévues à cet effet (touches R et R3). Lorsqu'un premier utilisateur est en ligne avec un deuxième utilisateur, il peut joindre le service et mettre le deuxième utilisateur en attente en appuyant sur la touche R, puis contacter un troisième utilisateur en composant le numéro de téléphone de ce dernier. Lorsque le premier utilisateur actionne la touche R3 de son terminal, les trois utilisateurs sont mis en communication simultanée. Une fonction de va-et-vient permet au premier utilisateur de se mettre en communication alternativement avec les deux autres utilisateurs.

Ce service ne permet de mettre en communication simultanée que trois utilisateurs. La capacité des commutateurs empêche toute extension de ce service à un nombre plus importants d'interlocuteurs. En outre le service est peu ergonomique, le fait de devoir activer successivement différentes touches de clavier téléphonique spécialement prévues à cet effet rebutant de nombreux utilisateurs inexpérimentés.

On connaît également un système de mise en communication simultanée sur lequel est basé le service de France Télécom appelé Conférence Téléphone. Ce service permet de mettre en communication simultanée un nombre illimité d'utilisateurs. Chaque utilisateur se met en communication en composant un numéro de téléphone spécifique qui entraîne une connexion avec un équipement de pont de conférence. Ensuite, l'appelant compose un code par commandes DTMF pour préciser à quelle réunion téléphonique il participe. Le pont de conférence assure la mise en relation des personnes qui ont composé le même code.

Ce service présente comme principal inconvénient le fait que les utilisateurs doivent prendre rendez vous pour appeler au même moment. Ce service est en outre relativement coûteux.

Des services similaires, comme les services de France Télécom connus sous le nom de Réunion Téléphone et Réunion Flash, le service d'Ericsson connu sous le nom d'Automatic Meet Me Service ou le service Genesys connu sous le nom de Telemeeting, présentent le même inconvénient.

On connaît encore un système de mise en communication simultanée sur lequel est basé le service de Genesys appelé TeleEvent. Les utilisateurs de ce service appèlent un numéro spécifique et ils sont accueillis par un opérateur qui effectue les connexions appropriées et gère la conférence téléphonique. Alternativement, l'opérateur peut appeler les participants.

Ce service, utilisant un opérateur, est extrêmement coûteux.

Est également connu un système de mise en communication simultanée sur lequel est basé le service d'Ericsson connu sous le nom de Conference Call. Ce service concerne le réseau numérique à intégration de services (RNIS). L'initiateur de la conférence utilise son terminal RNIS pour appeler un pont de conférence puis il peut ensuite joindre chacun des participants.

Le principal inconvénient de ce service réside dans le fait que l'initiateur de la conférence doit avoir une ligne RNIS et un terminal spécifique. En outre, il n'y a pas d'aide en ligne pour simplifier la mise en relation des interlocuteurs.

Le problème à la base de l'invention est de permettre la mise en communication simultanée d'une pluralité d'utilisateurs de réseaux téléphoniques sans les inconvénients existants de l'état de la technique. Notamment, la mise en communication doit pouvoir être assurée sans que les utilisateurs n'aient à prendre de rendez-vous préalable et à partir de terminaux téléphoniques quelconques.

Le problème est résolu par un procédé de mise en communication simultanée d'une pluralité d'utilisateurs à travers un réseau téléphonique, une première connexion à travers ledit réseau ayant été préalablement établie entre un premier et un second utilisateurs. Le procédé comprend les étapes suivantes :
- l'établissement d'une seconde connexion entre le premier ou second utilisateur, dit utilisateur appelant, et un pont de conférence ;
- l'établissement d'une troisième connexion entre ledit pont de conférence et un troisième utilisateur, dit utilisateur appelé, sur une première commande de l'utilisateur appelant ;
- une mise en communication simultanée, par ledit pont de conférence, desdits premier, second et troisième utilisateurs, sur une seconde commande de l'utilisateur appelant.

Avantageusement, lesdites première et seconde commandes sont des signaux DTMF ou des commandes vocales.

La mise en communication simultanée des premier, second et troisième utilisateurs pourra être précédée d'une mise en communication par le pont de conférence de l'utilisateur appelant et de l'utilisateur appelé.

La seconde connexion sera par exemple établie par un commutateur à autonomie d'acheminement sur une demande de service de conversation à 3 de l'utilisateur appelant.

La première connexion pourra également être établie par un premier pont de conférence, distinct dudit ou identique audit pont de conférence. Dans ce cas, l'établissement de la première connexion comprendra typiquement les étapes suivantes :
- appel du premier pont de conférence par le premier utilisateur ,
- établissement d'une connexion entre le premier pont de conférence et le second utilisateur, sur une première commande du premier utilisateur ;
- mise en communication du premier et du second utilisateurs par le premier pont de conférence, sur une seconde commande du premier utilisateur .

L'établissement de la troisième connexion pourra être suivie de l'établissement d'une 4^{ième}, ..,N^{ième} connexion entre ledit pont de conférence et un 4^{ième}, ..,N^{ième} utilisateur, chaque n^{ième} connexion, 4≤n≤N, étant établie sur une première commande de l'utilisateur appelant et l'établissement de chaque n^{ième} connexion étant suivie d'une mise en communication simultanée par le pont de conférence des n utilisateurs y étant connectés. Avantageusement, la mise en communication simultanée desdits n utilisateurs sera précédée d'une mise en communication par le pont de conférence de l'utilisateur appelant et du i^{ème} utilisateur .

Avantageusement, chaque commande de l'utilisateur appelant sera précédée d'une étape de transmission par le pont de conférence d'un message vocal préenregistré indiquant audit utilisateur appelant les commandes qui sont à sa disposition.

L'invention est également définie par un système de mise en communication simultanée d'une pluralité d'utilisateurs d'un réseau téléphonique adapté à mettre en oeuvre les étapes du procédé exposé ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente schématiquement un système de mise en communication simultanée d'une pluralité d'utilisateurs de réseaux téléphoniques selon l'exemple de réalisation de la présente invention ; et
les Figs. 2, 3 et 4 sont des organigrammes représentant les différentes étapes d'un procédé de mise en communication simultanée d'une pluralité d'utilisateurs selon l'exemple de réalisation de la présente invention.

Un système selon un exemple de réalisation de l'invention peut avantageusement être mis en oeuvre sur un réseau intelligent (RI) du type du RI de modèle INCM (Intelligent Network Conceptual Model) dont l'architecture normalisée a été définie par l'UIT-T (Union Internationale des Télécommunications : groupe de spécifications Télécommunications). Le RI est particulièrement bien adapté aux services de grande capacité. Le RI sur commutateur à autonomie d'acheminement (RI 2G) est potentiellement moins coûteux d'utilisation que le RI sur centre de transit (RI 1G). Le système peut être mis en oeuvre sur un Service Node (SN), entité physique regroupant en un noeud du réseau des fonctionnalités équivalentes à celles du réseau intelligent. Les fonctionnalités du SN sont regroupées dans un serveur centralisé qui peut exécuter, par exemple, des opérations de gestion, d'aboutement, de supervision et de taxation. Les ressources réseau sont utilisées de manière moins efficace, car les communications sont acheminées par aboutement. En revanche, une mise en oeuvre sur un SN est moins coûteuse. Elle se prête bien à une phase de mise en oeuvre expérimentale, concernant un nombre réduit d'utilisateurs.

Le système peut avantageusement se baser sur un équipement de plate-forme vocale (PFV). Il s'agit d'un équipement informatique formant entité physique définie pour le réseau intelligent de type périphérique intelligent (IP, intelligent peripheral), similaire aux équipements utilisés dans les services de diffusion d'annonces ou de messagerie vocale, composé d'un serveur d'appel, d'un gestionnaire de scripts et de circuits vocaux, permettant la synthèse vocale et la reconnaissance vocale et/ou DTMF Cette plate-forme vocale est pourvue d'une fonction de pont de conférence (PFV-Conf), permettant la mise en communication par aboutement et la supervision d'appel.

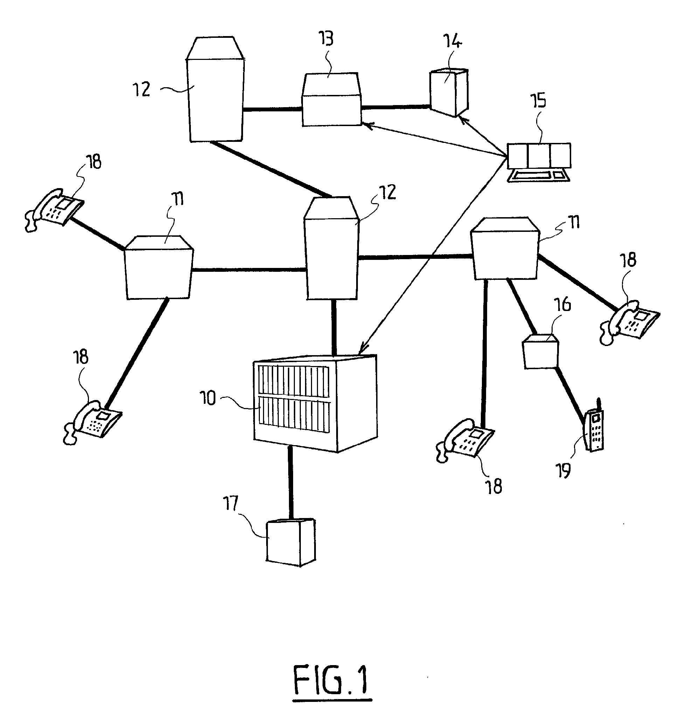

En référence à la Fig. 1, un système de mise en communication simultanée 1 est mis en oeuvre dans le cadre d'un réseau RI 1G. Ce réseau comprend des plate-formes vocales avec fonction pont de conférence 10 (PFV-Conf), des commutateurs à autonomie d'acheminement (CAA) 11, des centres de transit 12 (CT) avec commutateurs d'accès au service (CAS), un point de commande de services 13 (PCS), une base de données 14, un centre de supervision 15 et un centre d'enregistrement 17. Ce réseau est accessible au moyen de terminaux téléphoniques classiques 18, analogiques ou numériques, raccordés à des CAA 11, ou bien de terminaux mobiles 19 dont la liaison avec des CAA 11 est assurée par l'intermédiaire d'un MSC (Mobile Switching Controller) 16.

Lorsqu'un premier utilisateur désire initier une conversation téléphonique à plusieurs personnes, il compose sur son terminal téléphonique un numéro court d'accès à la PFV-Conf. Le CT 12 sur lequel est raccordé le CAA 11 correspondant déclenche automatiquement une activation du CAS sur analyse du numéro demandé. Le PCS 13 assurant la gestion du service est appelé. Ce PCS 13 analyse le numéro de l'appelant et recherche dans la base de données 14, dans laquelle sont stockées les données concernant les utilisateurs du service, les données correspondant à l'utilisateur appelant. Est par exemple vérifié si cet utilisateur a accès au service de conversation téléphonique à plusieurs correspondant au système 1. Lorsque la base de données 14 confirme l'accès, le PCS 13 dirige l'appel vers la PFV-Conf 10 la plus proche. Les échanges se font en protocole INAP (Intelligent Network Application Protocol). La PFV-Conf 10 déroule alors le script correspondant pour demander par message vocal un numéro de téléphone à composer par le premier utilisateur. Lorsque le premier utilisateur a composé le numéro d'un autre utilisateur, la PFV-Conf appelle cet utilisateur et le met en communication avec le premier utilisateur. Ensuite, à chaque fois que le premier utilisateur le demande par commande DTMF et/ou commande vocale, il peut se remettre en communication avec la PFV-Conf pour appeler un nouvel utilisateur avec qui il est mis en communication et qui peut être ajouté à la conversation en cours. Quand la communication est terminée, la PVF-Conf transmet des données sur la communication, par exemple le DC (Détail de Communication), au centre d'enregistrement 17 pour la facturation. Le centre de supervision 15 vérifie que la PFV-Conf 10 et la base de données 14 supportent la charge.

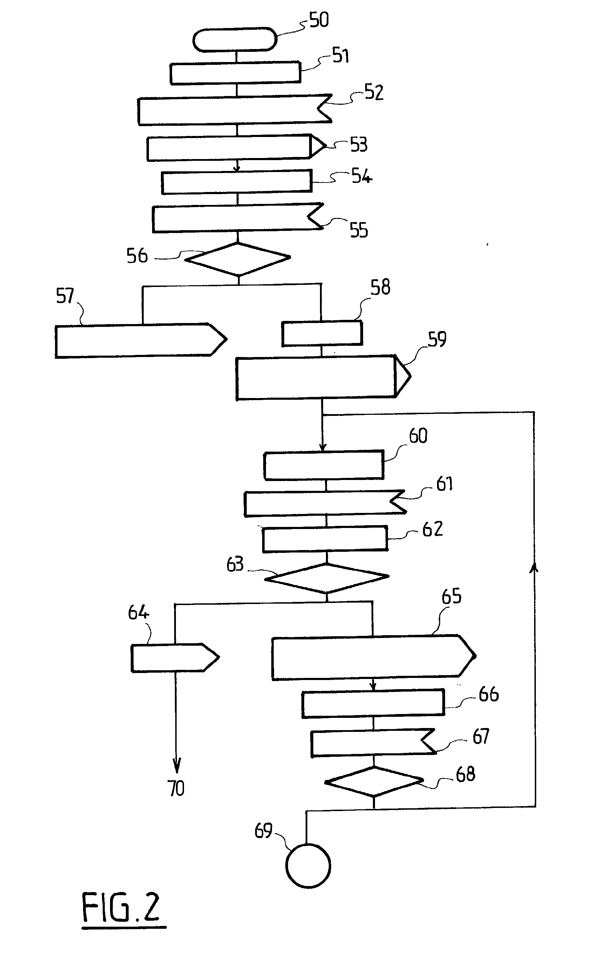

Les Figs. 2, 3 et 4 sont des organigrammes représentant les différentes étapes d'un procédé de mise en communication simultanée d'une pluralité d'utilisateurs exécuté par le système 1 représenté sur la Fig. 1.

En référence à la figure 2, dans une première étape 50, un premier utilisateur, que l'on appellera « l'appelant », compose sur son terminal téléphonique le numéro court d'accès au service, par exemple un numéro à quatre chiffres.

Dans tout le procédé, les actions de l'appelant se font par l'intermédiaire des commandes DTMF générées par la manipulation de touches de clavier téléphonique. Alternativement, elles peuvent aussi se faire par l'intermédiaire de commandes vocales ou d'une combinaison de commandes DTMF et de commandes vocales.

L'étape 51 est une étape d'attente de déclenchement, et l'étape 52 correspond à la réception de la demande de déclenchement, contenant le numéro de l'appelant et le numéro court composé.

Dans l'étape 53, le numéro de l'appelant est envoyé vers la base de données pour analyse des données de cet appelant. L'étape 54 est une étape d'attente de réponse de la base de données et l'étape 55 correspond à la réception de la réponse de la base de données.

Dans l'étape 56 est vérifié, si en fonction de la réponse de la base de données, l'appelant a ou non accès au service. Si oui, le procédé va à l'étape 58, si non, à l'étape 57.

Dans l'étape 57 est diffusé un message vocal indiquant à l'appelant qu'il n'a pas accès au service, puis est mis fin à la communication.

Dans l'étape 58, un compteur N est remis à zéro.

Dans l'étape 59 est diffusé un message vocal indiquant à l'appelant qu'il convient de composer le numéro d'un utilisateur et qu'un programme d'aide est activable par commande DTMF (par exemple en actionnant les touches 0 puis dièse du terminal téléphonique). L'étape 60 est une étape d'attente du numéro demandé et l'étape 61 correspond à la réception de ce numéro.

Dans l'étape 62, le numéro composé par l'appelant est analysé afin de vérifier si le numéro composé est un numéro autorisé.

Dans l'étape 63, le résultat de cette analyse détermine le droit d'accès au service.

Si l'appelant possède un droit d'accès, le procédé se poursuit à l'étape 64, si non, à l'étape 65.

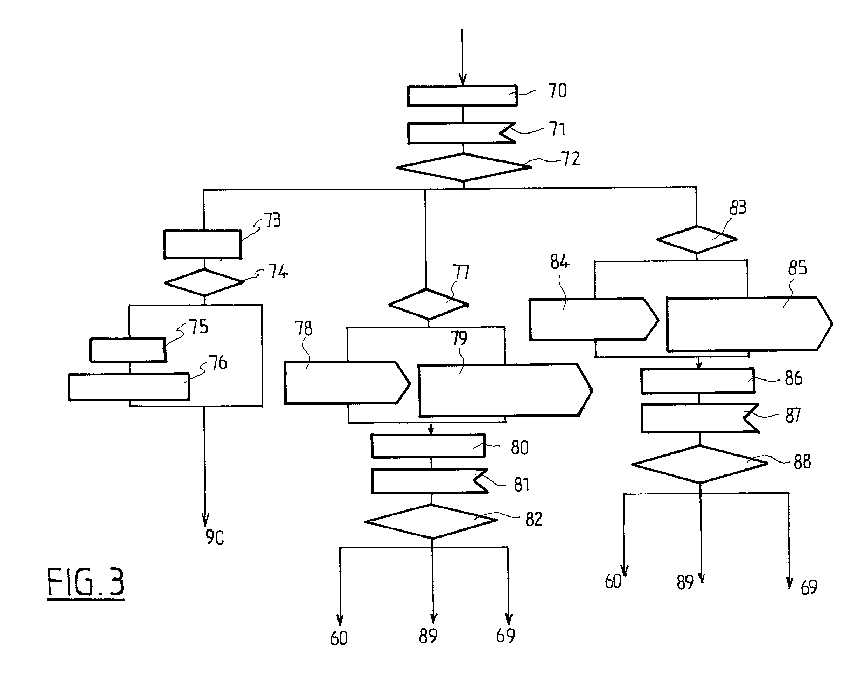

Dans l'étape 64, l'appel est acheminé vers le numéro demandé. Le procédé se poursuit ensuite à l'étape 70 représentée sur la figure 3.

Dans l'étape 65, un message vocal est diffusé pour indiquer à l'appelant que le numéro qu'il a composé est erroné ou interdit et lui proposer soit de composer un nouveau numéro, soit de raccrocher. L'étape 66 est une étape d'attente de la réponse de l'appelant. L'étape 67 correspond à la réception de cette réponse.

Dans l'étape 68, la réponse de l'appelant est analysée. Si l'appelant a raccroché, le procédé va à l'étape 69 dans laquelle est mis fin à la communication. Si l'appelant a composé un autre numéro, le procédé retourne à l'étape 60.

En référence à la figure 3, l'étape 70 est une étape d'attente de la réponse d'un utilisateur vers lequel un appel a été acheminé. L'étape 71 correspond à la réception de cette réponse.

Dans l'étape 72, la réponse de l'utilisateur appelé est analysé. Si l'utilisateur appelé à décroché, le procédé va à l'étape 73. Si le terminal de l'utilisateur appelé est inaccessible (numéro occupé), le procédé va à l'étape 77. Dans le cas d'absence de réponse, le procédé va à l'étape 83.

Dans l'étape 73, le compteur N est incrémenté d'une unité (N=N+1).

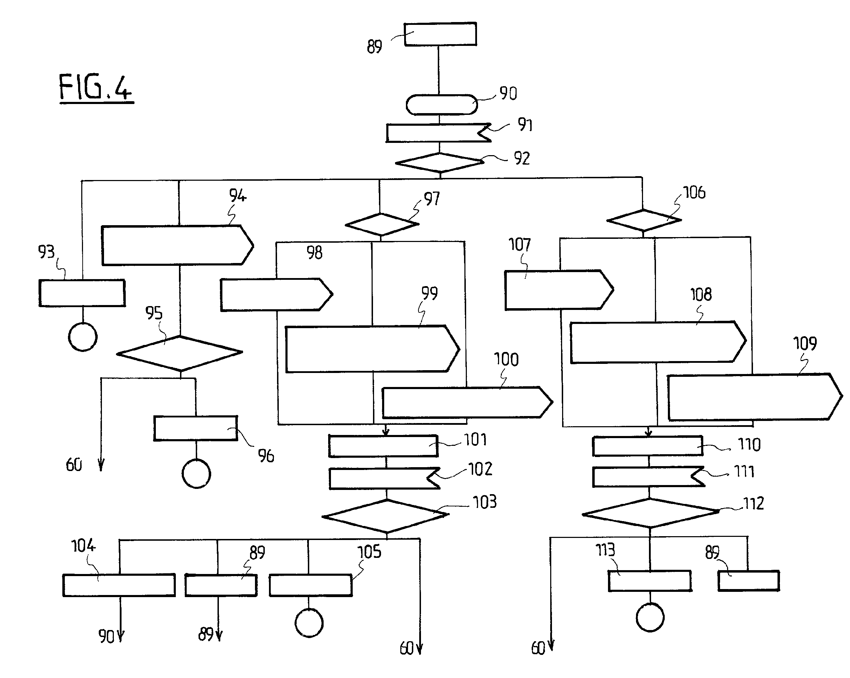

Dans l'étape 74, l'état du compteur N est analysé. Si N est égal à 1, le procédé va à l'étape 75. Si N est supérieur à 1, le procédé va à l'étape 90 représentée sur la figure 4.

Dans l'étape 75 est déclenché un chronométrage T de durée de conversation.

L'étape 76 est une étape d'aboutement. L'appelant et le premier utilisateur appelé sont alors mis en communication et peuvent entamer une conversation. Une fois l'aboutement effectué, la supervision est enclenchée. Le procédé se poursuit ensuite à l'étape 90 représentée sur la figure 4.

Dans l'étape 77, l'état du compteur N est analysé. Si N est égal à 1, le procédé va à l'étape 78. Si N est supérieur à 1, le procédé va à l'étape 79.

Dans l'étape 78, est diffusé un message vocal indiquant que le correspondant est occupé et proposant de composer un autre numéro ou de raccrocher. Le procédé va ensuite à l'étape 80.

Dans l'étape 79, est diffusé un message vocal indiquant que le correspondant est occupé et proposant de composer un autre numéro, de revenir à la conversation en activant une commande DTMF (par exemple en actionnant la touche 1 du terminal téléphonique) ou de raccrocher. Le procédé va ensuite à l'étape 80.

L'étape 80 est une étape d'attente de réponse de la part de l'appelant et l'étape 81 correspond à la réception de la réponse de l'appelant.

Dans l'étape 82 est analysée la réponse de l'appelant. Si l'appelant a composé un numéro de téléphone, le procédé retourne à l'étape 60 représentée sur la figure 2. Si l'appelant a actionné la commande DTMF prévue (par exemple la touche 1), le procédé va à une étape 89 représentée sur la figure 4. Si l'appelant a raccroché, le procédé va à l'étape 69 où est mis fin à la communication.

Dans l'étape 83, l'état du compteur N est analysé. Si N est égal à 1, le procédé va à l'étape 84. Si N est supérieur à 1, le procédé va à l'étape 85.

Dans l'étape 84, est diffusé un message vocal indiquant que le correspondant ne répond pas et proposant de composer un autre numéro ou de raccrocher. Le procédé va ensuite à l'étape 86.

Dans l'étape 85, est diffusé un message vocal indiquant que le correspondant ne répond pas et proposant de composer un autre numéro, de revenir à la conversation en activant une commande DTMF (par exemple en actionnant la touche 1 du terminal téléphonique) ou de raccrocher. Le procédé va ensuite à l'étape 86.

L'étape 86 est une étape d'attente de réponse de la part de l'appelant et l'étape 87 correspond à la réception de la réponse de l'appelant.

Dans l'étape 88 est analysée la réponse de l'appelant. Si l'appelant a composé un numéro de téléphone, le procédé retourne à l'étape 60 représentée sur la figure 2. Si l'appelant a actionné la commande DTMF prévue (par exemple la touche 1), le procédé va à une étape 89 représentée sur la figure 4. Si l'appelant a raccroché, le procédé va à l'étape 69 où est mis fin à la communication.

En référence à la figure 4, dans une étape 89, la PFV-Conf remet en communication tous les utilisateurs pour lesquels l'aboutement a été effectué, c'est à dire les utilisateurs déjà intégrés à la conversation simultanée, puis se met en attente.

L'étape 90 est une étape d'attente de certaines actions ou commandes effectuées par l'appelant ou un utilisateur appelé ou du dépassement d'un temps prédéterminé de durée de conversation mesurée par le chronométrage T. L'étape 91 correspond à la détection d'une action ou à la réception d'une commande effectuée par l'appelant ou par un utilisateur appelé ou au dépassement du temps prédéterminé par le chronométrage T.

Dans l'étape 92 est analysé l'événement qui s'est produit à l'étape 91. Si l'appelant a raccroché, le procédé va à l'étape 93. Si le chronométrage T indique qu'un temps prédéterminé a été dépassé, le procédé va à l'étape 94. Si a été reçue de la part de l'appelant une commande DTMF correspondant à l'activation du programme d'aide (par exemple, si l'appelant a actionné la touche 0 et la touche dièse de son terminal), le procédé va à l'étape 97. Si un utilisateur appelé a raccroché, le procédé va à l'étape 106.

Dans l'étape 93, le pont de conférence est libéré et des informations de type DC (Détail de Communication) sont transmises au centre d'enregistrement. Il est mis fin à la communication.

Dans l'étape 94, est diffusé un message vocal indiquant que l'appelant doit entrer en communication avec un autre correspondant faute de quoi il sera mis fin à la communication.

Dans l'étape 95 est analysée une réponse de l'appelant. Si l'appelant a composé un nouveau numéro de téléphone, le procédé va à l'étape 60 représentée sur la figure 2. Si l'appelant a raccroché, le procédé va à l'étape 96.

Dans l'étape 96, le pont de conférence est libéré et des informations de type DC (Détail de Communication) sont transmises au centre d'enregistrement. Il est mis fin à la communication.

Dans l'étape 97, l'état du compteur N est analysé. Si le compteur N est égal à 1, le procédé va à l'étape 98. Si N est égal à 2, le procédé va à l'étape 99. Si N est supérieur à 2, le procédé va à l'étape 100.

Dans l'étape 98 est diffusé un message vocal indiquant que l'appelant doit composer un nouveau numéro. Le procédé se poursuit ensuite à l'étape 101.

Dans l'étape 99 est diffusé un message vocal indiquant que, pour se mettre en communication avec tous les utilisateurs, l'appelant doit émettre une commande DTMF (par exemple il doit actionner la touche 0 de son terminal), que, pour revenir à la conversation avec le premier utilisateur appelé, il doit émettre une autre commande DTMF (par exemple il doit actionner la touche 1 de son terminal) et que, pour joindre un nouvel utilisateur, il doit composer un nouveau numéro. Le procédé se poursuit ensuite à l'étape 101.

Dans l'étape 100 est diffusé un message vocal indiquant que, pour se mettre en communication avec tous les utilisateurs, l'appelant doit émettre une commande DTMF (par exemple il doit actionner la touche 0 de son terminal) et que, pour joindre un nouvel utilisateur, il doit composer un nouveau numéro. Le procédé se poursuit ensuite à l'étape 101.

L'étape 101 est une étape d'attente d'une réponse de la part de l'appelant. L'étape 102 correspond à la réception de cette réponse.

L'étape 103 est une étape d'analyse de la réponse reçue à l'étape 102. Si l'appelant a envoyé une des commandes DTMF prévues (par exemple s'il a actionné la touche 0 de son terminal), le procédé va à l'étape 104. Si l'appelant a envoyé l'autre commande DTMF prévue (par exemple s'il a actionné la touche 1 de son terminal), le procédé retourne à l'étape 89. Si l'appelant a raccroché, le procédé va à l'étape 93. Si l'appelant a composé un nouveau numéro, le procédé retourne à l'étape 60 représentée sur la figure 2.

L'étape 104 est une étape d'aboutement. Le dernier utilisateur appelé est intégré à la conversation simultanée. La supervision est actionnée de manière correspondante. Le procédé se poursuit ensuite à l'étape 90 représentée sur la figure 4.

Dans l'étape 105, le pont de conférence est libéré et des informations de type DC (Détail de Communication) sont transmises au centre d'enregistrement. Il est mis fin à la communication.

Dans l'étape 106, l'état du compteur N est analysé. Si le compteur N est égal à 1, le procédé va à l'étape 107. Si N est égal à 2, le procédé va à l'étape 108. Si N est supérieur à 2, le procédé va à l'étape 109.

Dans l'étape 107 est diffusé un message vocal indiquant que le premier appelé a raccroché et que l'appelant doit composer un nouveau numéro ou raccrocher. Le procédé se poursuit ensuite à l'étape 110.

Dans l'étape 108 est diffusé un message vocal indiquant que le dernier utilisateur appelé a raccroché, que, pour revenir à la conversation avec le premier utilisateur appelé, il doit émettre une commande DTMF (par exemple il doit actionner la touche 1 de son terminal) et que, pour joindre un nouvel utilisateur, il doit composer un nouveau numéro. Le procédé se poursuit ensuite à l'étape 110.

Dans l'étape 109 est diffusé un message vocal indiquant qu'un utilisateur a raccroché, que, pour se remettre en communication avec tous les utilisateurs, l'appelant doit émettre une commande DTMF (par exemple il doit actionner la touche 0 de son terminal) et que, pour joindre un nouvel utilisateur, il doit composer un nouveau numéro. Le procédé se poursuit ensuite à l'étape 110.

L'étape 110 est une étape d'attente d'une réponse de la part de l'appelant. L'étape 111 correspond à la réception de cette réponse.

L'étape 112 est une étape d'analyse de la réponse reçue à l'étape 111. Si l'appelant a envoyé l'une ou l'autre des commandes DTMF prévues (par exemple s'il a actionné la touche 0 ou 1 de son terminal), le procédé va à l'étape 89. Si l'appelant a raccroché, le procédé va à l'étape 113. Si l'appelant a composé un nouveau numéro, le procédé retourne à l'étape 60 représentée sur la figure 2.

Dans l'étape 113, le pont de conférence est libéré et des informations de type DC (Détail de Communication) sont transmises au centre d'enregistrement. Il est mis fin à la communication.

Dans ce qui suit est décrit un exemple de fonctionnement du système 1 de la figure 1 dans le cas où l'appelant sait qu'il va faire une conversation téléphonique à plusieurs personnes. L'exemple de fonctionnement est décrit pour une conversation à quatre personnes.

L'appelant compose le numéro court d'appel de la PFV-Conf. La PFV-Conf active son script vocal indiquant à l'appelant de composer le numéro d'un premier appelé. L'appelant compose le numéro du premier appelé. Si ce dernier décroche, il est mis en conversation avec l'appelant. Pour appeler une autre personne, l'appelant envoie une commande DTMF transmise dans la bande (en actionnant les touches 0 et dièse de son terminal dans l'exemple donné dans la description du procédé). Un message vocal d'attente est alors diffusé par la PFV-Conf au premier appelé. Simultanément, la PFV-Conf active un script vocal guidant la mise en relation de l'appelant et du deuxième appelé. Si, après que l'appelant a composé son numéro, le deuxième appelé décroche, il est mis en communication avec l'appelant. Dans le cas où le deuxième appelé n'aurait pas décroché, la PFV-Conf diffuse un message vocal qui propose d'appeler un nouveau correspondant ou bien de revenir en conversation avec le premier appelé. Si l'appelant désire faire une conversation à plusieurs, il actionne à nouveau les touches 0 et dièse de son terminal. La PFV-Conf diffuse à son intention un message vocal qui propose au choix de faire une conversation simultanée en appuyant sur une touche de son terminal (0 dans l'exemple donné dans la description du procédé) ou de faire une conversation en va-et-vient en appuyant sur une autre touche de son terminal (1 dans l'exemple donné dans la description du procédé). Si l'appelant actionne la touche 0, la PFV-Conf met l'appelant et les deux appelés en conversation simultanée. Si l'appelant veut faire intervenir une quatrième personne, il actionne à nouveau les touches 0 et dièse de son terminal. Pendant ce temps, le premier et le second appelés restent seuls en conversation, recevant régulièrement un signal sonore de la PFV-Conf. La PFV-Conf active un script vocal pour proposer à A de composer un numéro ou de revenir en double appel avec le premier ou avec le second appelé. Si l'appelant a composé le numéro du troisième appelé et que ce dernier a décroché, l'appelant et le troisième appelé sont mis en relation. Pour ajouter les deux premiers appelés à la conversation, l'appelant actionne à nouveau les touches 0 et dièse de son terminal. La PFV-Conf diffuse alors un message qui propose au choix de faire une conversation à plusieurs (en actionnant la touche 0) ou une conversation en va et vient (en actionnant les touches 1, 2 ou 3).

On va maintenant décrire un exemple de fonctionnement du système 1 de la figure 1 dans le cas où le besoin de faire une conversation téléphonique à plusieurs personnes se manifeste au cours d'une discussion téléphonique entre deux utilisateurs. L'exemple de fonctionnement est décrit pour une conversation à quatre personnes.

Le système 1 est utilisé en coopération avec le système de mise en communication simultanée sur lequel est basé le service de France Télécom connu sous le nom de Conversation à Trois. Ce service permet à trois personnes de converser en même temps. Sont utilisés les commutateurs à autonomie d'acheminement (CAA) du réseau téléphonique public qui sont commandés à partir du terminal téléphonique par des commandes DTMF générées par la manipulation de touches de clavier téléphonique spécialement prévues à cet effet (touches R et R3). Lorsqu'un premier utilisateur est en ligne avec un deuxième utilisateur, il peut joindre le service et mettre le deuxième utilisateur en attente en appuyant sur la touche R, puis contacter un troisième utilisateur en composant le numéro de téléphone de ce dernier. Lorsque le premier utilisateur actionne la touche R3 de son terminal, les trois utilisateurs sont mis en communication simultanée. Une fonction de va-et-vient permet au premier utilisateur de se mettre en communication alternativement avec les deux autres utilisateurs.

Un des utilisateurs, qu'on désignera par le terme « appelant», actionne la touche R de son terminal téléphonique. Il active ainsi le service de conversation à trois du CAA. Le film d'attente du CAA est diffusé à l'autre utilisateur qu'on désignera par le terme « premier appelé ». L'appelant compose le numéro court d'appel de la PFV-Conf. La PFV-Conf active son script vocal indiquant à l'appelant de composer le numéro d'un deuxième appelé. L'appelant compose le numéro du deuxième appelé. Si ce dernier décroche, il est mis en conversation avec l'appelant. Pour faire une conversation à trois avec les deux appelés, l'appelant active le service de conversation à trois du CAA en actionnant la touche R3 de son terminal. Pour appeler une autre personne, l'appelant envoie une commande DTMF transmise dans la bande (en actionnant les touches 0 et dièse de son terminal dans l'exemple donné dans la description du procédé). Un message vocal d'attente est alors diffusé par la PFV-Conf au second appelé. Simultanément, la PFV-Conf active un script vocal guidant la mise en relation de l'appelant et du troisième appelé. Si, après que l'appelant a composé son numéro, le troisième appelé décroche, il est mis en communication avec l'appelant et avec le premier appelé, toujours en communication avec l'appelant à travers le pont de conférence du CAA. Dans le cas où le troisième appelé n'aurait pas décroché, la PFV-Conf diffuse un message vocal qui propose d'appeler un nouveau correspondant ou bien de revenir en conversation avec le second appelé. Si l'appelant désire faire une conversation à plusieurs, il actionne à nouveau les touches 0 et dièse de son terminal. La PFV-Conf diffuse à son intention un message vocal qui propose au choix de faire une conversation simultanée en appuyant sur une touche de son terminal (0 dans l'exemple donné dans la description du procédé) ou de faire une conversation en va-et-vient en appuyant sur une autre touche de son terminal (1 dans l'exemple donné dans la description du procédé). Si l'appelant actionne la touche 0, la PFV-Conf met l'appelant et les trois appelés en conversation simultanée.

D'autre part, en utilisant les services des CAA, un utilisateur quelconque, autre que l'appelant, dans un groupe en communication simultanée peut élargir la conversation à des nouveaux membres. Pour cela, il active la touche R de son terminal téléphonique et active donc un pont de conférence du CAA correspondant. Les autres membres du groupe restent alors en communication tandis que l'utilisateur en question appelle la PFV-Conf (ou une autre suivant les critères de proximité). La PFV-Conf réserve un nouveau pont de conférence puis active son script vocal guidant l'utilisateur pour joindre un nouveau participant. Pour que tous les utilisateurs soient réunis dans une même conversation simultanée, il suffit à l'utilisateur en question d'actionner la touche R3 de son terminal téléphonique, activant ainsi le pont de conférence de son CAA ce qui met en relation tous ces utilisateurs via les deux ponts de conférence activés. Tout comme l'appelant qui a activé le premier pont de conférence de la PFV-Conf, l'utilisateur ayant activé le second pont de conférence de la PFV-Conf peut ajouter d'autres participants à la conversation.

Le système 1 est compatible avec les services de type double appel. Un utilisateur en cours de conversation avec un groupe peut à tout moment activer un double appel par appui sur la touche R. Cet utilisateur se retire alors momentanément de la conversation et peut appeler quelqu'un d'extérieur. Pour revenir à la discussion avec le groupe, il suffit que le correspondant extérieur raccroche ou que l'utilisateur actionne la touche R2 de son terminal.

Le système 1 est également compatible avec les services de type signal d'appel et messagerie vocale. Si un utilisateur en cours de conversation avec un groupe est appelé, il entendra le signal sonore du service de signal d'appel. Il suffira alors à cet utilisateur d'activer sa commande de double appel pour entrer en communication avec la personne qui l'appelle. Lorsque cette dernière raccroche, l'utilisateur est automatiquement remis en communication avec le groupe. Lorsqu'un utilisateur en cours de conversation a accès à un service de messagerie vocale et que cette personne est appelée, l'appel entrant sera aiguillé vers sa boîte vocale.

## Revendications

1. Procédé de mise en communication simultanée d'une pluralité d'utilisateurs à travers un réseau téléphonique, une première connexion à travers ledit réseau ayant été préalablement établie entre un premier et un second utilisateurs, **caractérisé en ce qu'**il comprend :
- l'établissement d'une seconde connexion entre le premier ou second utilisateur, dit utilisateur appelant, et un pont de conférence ;
- l'établissement d'une troisième connexion entre ledit pont de conférence et un troisième utilisateur, dit utilisateur appelé, sur une première commande de l'utilisateur appelant ;
- une mise en communication simultanée, par ledit pont de conférence, desdits premier, second et troisième utilisateurs, sur une seconde commande de l'utilisateur appelant.

2. Procédé de mise en communication simultanée selon la revendication 1, **caractérisé en ce que** lesdites première et seconde commandes sont des signaux DTMF ou des commandes vocales.

3. Procédé de mise en communication simultanée selon la revendication 1 ou 2, **caractérisé en ce que** la mise en communication simultanée des premier, second et troisième utilisateurs est précédée d'une mise en communication par le pont de conférence de l'utilisateur appelant et de l'utilisateur appelé.

4. Procédé de mise en communication simultanée selon l'une des revendications 1 à 3, **caractérisé en ce que** la seconde connexion est établie par un commutateur à autonomie d'acheminement sur une demande de service de conversation à 3 de l'utilisateur appelant ;

5. Procédé de mise en communication simultanée selon l'une des revendications 1 à 3, **caractérisé en ce que** la première connexion est établie par un premier pont de conférence, distinct dudit ou identique audit pont de conférence.

6. Procédé de mise en communication simultanée selon la revendication 5, **caractérisé en ce que**, la première connexion est établie par les étapes suivantes :
- appel du premier pont de conférence par le premier utilisateur ;
- établissement d'une connexion entre le premier pont de conférence et le second utilisateur, sur une première commande du premier utilisateur ;
- mise en communication du premier et du second utilisateurs par le premier pont de conférence, sur une seconde commande du premier utilisateur .

7. Procédé de mise en communication simultanée selon l'une des revendications précédentes, **caractérisé en ce que**, l'établissement de la troisième connexion est suivie de l'établissement d'une 4^{ième}, ..,N^{ième} connexion entre ledit pont de conférence et un 4^{ième}, .., N^{ième} utilisateur, chaque n^{ième} connexion, 4≤n≤N, étant établie sur une première commande de l'utilisateur appelant et l'établissement de chaque n^{ième} connexion étant suivie d'une mise en communication simultanée par le pont de conférence des n utilisateurs y étant connectés.

8. Procédé de mise en communication simultanée selon la revendication 7, **caractérisé en ce que** la mise en communication simultanée desdits n utilisateurs est précédée d'une mise en communication par le pont de conférence de l'utilisateur appelant et du i^{ème} utilisateur .

9. Procédé de mise en communication simultanée selon l'une des revendications précédentes, **caractérisé en ce que** chaque commande de l'utilisateur appelant est précédée d'une étape de transmission par le pont de conférence d'un message vocal préenregistré indiquant audit utilisateur appelant les commandes qui sont à sa disposition.

10. Système de mise en communication simultanée d'une pluralité d'utilisateurs d'un réseau téléphonique, **caractérisé en ce qu'**il est adapté à mettre en oeuvre les étapes du procédé selon l'une quelconque des revendications 1 à 9.
